# EUROPEAN PATENT SPECIFICATION

(11) **EP 2 817 187 B1**
(45) Date of publication and mention of the grant of the patent: **04.09.2019**
(21) Application number: 13723196.5
(22) Date of filing: 20.02.2013
(51) Int. Cl.: B60T 8/17, B60T 8/18, B60T 8/32, B60T 8/88, B60T 11/10, B60T 13/26, B60T 17/22

(54) **TRAILER ACCESS POINT**
ANHÄNGERZUGANGSPUNKT
POINT D'ACCÈS DE REMORQUE

(30) Priority: 20.02.2012 GB 201202871; 17.09.2012 GB 201216544
(43) Date of publication of application: 31.12.2014
(73) Proprietor: KNORR-BREMSE Systeme für Nutzfahrzeuge GmbH, 80809 München (DE)
(72) Inventor: FRY, Matthew, 80809 München (DE); PAHL, Stefan, 80809 München (DE); MEDERER, Martin, 80809 München (DE)
(86) International application number: PCT/IB2013/000450
(87) International publication number: WO 2013/124731

(56) References cited:
- EP-A1- 1 593 552
- EP-A2- 1 538 040
- DE-A1-102008 022 026
- DE-A1-102009 008 342
- GB-A- 2 363 435
- GB-A- 2 462 194
- US-A1- 2004 093 143
- US-A1- 2008 257 656
- US-A1- 2010 152 989
- US-A1- 2010 188 203
- US-A1- 2010 211 277
- US-A1- 2010 222 979
- US-B1- 6 845 851

## Description

The invention relates to a trailer electronic braking system.

Electronic braking systems for commercial vehicle trailers and other related applications are becoming increasingly complex as additional functionality is introduced. It is also a highly competitive, cost conscious market. Trailers do not generally possess any autonomous power supply and rely for power on a tractor vehicle. The trailer is provided with an autonomous brake system having an independently operable trailer brake control unit. The trailer electronic brake control unit enables the trailer to be equipped with stability control and greatly enhances the safety of the trailer.

There are many hundreds of small trailer builders in Europe and in other markets, due to customer demand for a high degree of customization on trailers. Different trailer operators will also want to have different auxiliary functions. In the context of a trailer, auxiliary functions is a term of art covering a variety of features relevant to the operation of the trailer such as Lift Axle Control, Reset to Ride and Integrated Speed Switch. The control algorithms for these functions can be held on a dedicated area of the brake control unit as is disclosed in GB2395241 or on a separate integrated circuit.

As many trailers are in effect bespoke, it is necessary to keep detailed and accurate configuration information for the trailer on the trailer as the trailer will be used with different tractors. Bar code solutions have been proposed but the barcodes are usually only applied by means of an adhesive label, which may break or be covered with dirt during its use. To ease the maintenance and servicing of the brake systems, trailer brake manufacturers offer electronic data storage modules such as a trailer information module (TIM) or Info-Centre which is adapted to read and store operating and/or configuration data for the trailer on which it is installed and then to display the information on a screen for an operator. As such systems need to work when the trailer is without power and also need to operate in a wide range of conditions such as from -20 °C to +50 °C, as well as in exposed and dirty conditions, the systems have tended to be expensive in the context of a highly competitive trailer market and have not been widely adopted in many markets. the systems have tended to be expensive in the context of a highly competitive trailer market and have not been widely adopted in many markets. DE 10 2009 008 342 A1, US2006/192427, US2006/208873 and US5890080 disclose systems that are adapted to transmit logic signals from sensors on a trailer to a third party device typically using the powerline carrier used on US based trailer systems.

The known systems suffer from an additional problem in that the onboard data generated by the sensors and brake control system can only be extracted using proprietary software and diagnostic hardware systems. The diagnostic equipment represents an additional overhead for the trailer builder and the software suffers from the problem that it is specific to a particular operating system. As operating systems are updated every two to three years and are often not fully backward compatible, the software needs to be regularly updated. As the lifespan of a trailer has proven to be longer than the lifespan of major operating systems, this represents a significant commercial and technical problem to the widespread adoption of electronic data storage systems. An example of such a system is disclosed in DE102009008342.

The present invention therefore seeks to provide a more flexible and cost effective solution to the problems addressed by the known electronic data storage solutions.

According to the invention there is provided a trailer electronic braking system comprising a braking device capable of generating a braking force on a wheel on the trailer, a brake force into the brake cylinders being controllable by a braking ECU, which braking ECU is connected to a standards compliant communication bus on said trailer and is adapted to receive data inputs from sensors on the trailer, wherein the system further comprises means to interface to trailer electronics and a communications interface, wherein the said means is adapted to receive inputs from further sensors on the trailer and/or to read the inputs from sensors received by the braking ECU such that data received from the sensors can be rendered in standards compliant software and transmitted to a further device remote or distinct from the trailer, which further device is adapted to display information so received using a standards compliant client. serving to a third party device, which then does not need to process this data further. This obviates the technical prejudice that large amounts of data need to be processed locally to be able to graphically display the information, which prevents the use of a local microcontroller.

The invention has the advantage that it provides universal method of providing access to and control of onboard data of a trailer electronic braking system. It further avoids the need to provide bespoke diagnostic hardware and proprietary software. The microcontroller of the invention is therefore adapted to serve up information, which is readable by a standardised client program such as a web browser. This rendering of the data has previously only been possible using proprietary software and hardware. Rendering in this context is the conversion of the data into a visual form, in particular a visual form suitable for display by a standardised client program such as a web browser.

The invention makes access to the braking ECU data possible from any browser and hence from a laptop, smartphone or also from the tractor navigation system/on board computer. This means that bespoke software is no longer required and the display of the known information modules is no longer necessary, which in turn reduces the costs dramatically. The invention advantageously provides a mechanism of rendering or serving information which is readable by a web browser.

Preferably, the means is a separate microcontroller. Alternatively, the means can be incorporated into the trailer electronic brake control unit as an auxiliary function. Preferably the interface to the trailer electronic systems provides an interface to the trailer electronic brake control unit. Preferably, where the trailer is a refrigerated trailer, the interface is adapted to communicate with the refrigerator controls.

Exemplary embodiments of the invention will now be described in greater detail with reference to the drawings in which:

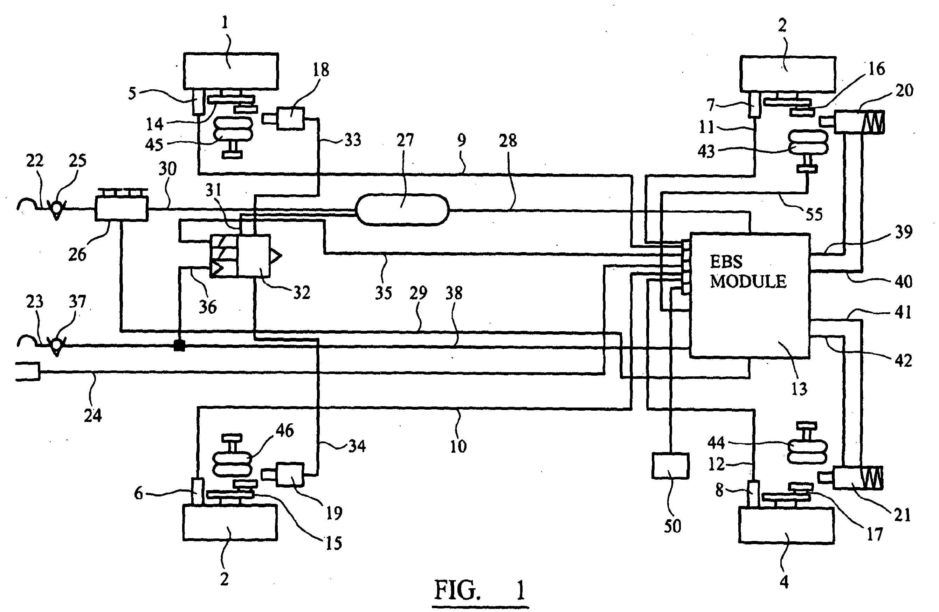

Fig. 1 shows a trailer electronic braking system
Fig. 2 shows a schematic diagram of the brake control with a trailer access microcontroller

The utility vehicle trailer has a steerable front axle with front wheels 1, 2 and a rear axle with rear wheels 3, 4. Rotational wheel speed sensors 5-8 are in each case assigned to the front wheels 1, 2 and the rear wheels 3, 4, and are connected by way of electric lines 9-12 with an electropneumatic brake pressure control module 13 (EBS module) which is primarily assigned to the rear axle brakes. One brake 14-17 is in each case assigned to the front wheels 1, 2 and the rear wheels 3, 4, which brake 14-17 can be applied by means of brake cylinders 18, 19 of the front axle or springloaded brake cylinders 20, 21 of the rear axle.

The braking system of the trailer vehicle can be connected by way of three connections, specifically a pneumatic supply line connection 22, a pneumatic control line connection 23 and an electric control connection 24, with the braking system of a tractor or a further trailer. The electric control line 24 provides the ISO 11992 CAN data connection.

The supply line connection 22 is connected by way of a filter valve 25 and a parking valve 26 with an air brake reservoir 27. From the air brake reservoir 27, a pneumatic line 28, 30 leads to a supply input of the pressure control module 13 and electropneumatic valve 32, which is adapted to supply ABS functionality. In addition, a pneumatic line 29 branches off the parking valve 26 to the pressure control module 13. A pneumatic line 30 extends between the parking valve 26 and the air brake reservoir 27.

The electropneumatic valve 32 is assigned jointly to both brake cylinders 18, 19 of the front axle and is connected with the brake cylinder 18 by way of a pneumatic line 33 and with the brake cylinder 19 by way of a pneumatic line 34. The valve 32 has two electric control inputs which are connected by way of "one" electric communication line 35 such as CAN, shown here only schematically, with the pressure control module 13.

Furthermore, the valve 32 has a pneumatic control input 36 which is connected by way of a filter valve 37 with the pneumatic control connection 23. The pneumatic control input 36 is also connected by way of a pneumatic control line 38 with a pneumatic control input of the pressure control module 13. The pressure control module 13 has an integrated pressure sensor (not shown) which measures the pressure in the pneumatic control line 38, that is, the control pressure present at the pneumatic control input 36 of the electropneumatic valve, which control pressure is identical to the maximal pressure which can be controlled into the brake cylinders 18, 19.

The pressure control module 13 has pneumatic outputs 39-42 which are connected by way of assigned pneumatic lines with the spring brake cylinders 20 or 21.

Furthermore, air bellows 43, 44 are provided at the rear axle and permit a determination of the axle load, particularly of the dynamic axle load during braking and starting. The air bellows 43, 44 are connected by way of pneumatic lines with the pressure control module 13. The pressure control module 13 has an integrated pressure sensor (not shown) which measures the pressure in the air bellows 43, 44. Correspondingly the pressure in airbags 45, 46 provided at the front axle, which here are electrically controlled, may be detected by an optional pressure transducer.

To provide stability control a lateral acceleration sensor is provided, which may also be integrated with a yaw sensor, and the output of the lateral acceleration sensor is fed to the pressure control module/ECU 13. Typically the lateral acceleration sensor is integrated into the pressure control module/ECU 13. In the event that lateral acceleration on the trailer is detected, the pressure control module can provide for increased brake force at the front and/or rear axles. When the lateral acceleration sensor detects lateral acceleration on the trailer in which it is installed, the sensor generates a signal setting the stability control to active.

The pressure control module 13 receives data from the wheel speed sensors on the trailer and also receives a signal indicating whether the brake pedal in the vehicle cab is depressed or not, as well as the brake pressure demand.

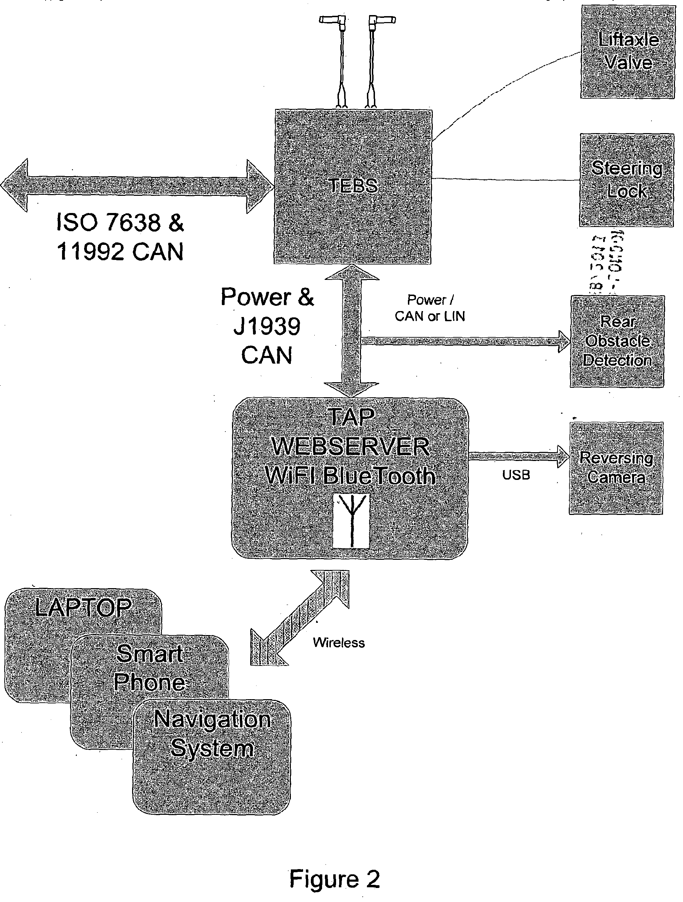

Figure 2 shows schematically the arrangement of the trailer access microcontroller with the trailer electronic braking system. The trailer electronic braking system is only partially illustrated for reasons of clarity but includes the pressure control module 13 which is shown receiving wheel speed signals from wheel speed sensors 5,6. The pressure control module 13 also receives inputs from the lift axles showing the position of the lift axles and also the steering lock. The pressure control module 13 also receives power and data via an electrical connection from the tractor and is also attached to an ISO 11992 CAN databus.

A trailer access point (TAP) comprising a microcontroller with a CAN interface is also provided, which is powered from the electrical connection. The microcontroller itself comprises an interface to the on-board electronic systems and the trailer electronic braking system and an interface for sending and receiving data in a wireless format . The communications interface can comprise one or more of a 802.11 transceiver or Bluetooth transceiver or radio transceiver. The trailer access point is connected to the CAN bus on the trailer and so is able to receive data from other devices on the CAN bus. The trailer access point can further be provided with USB ports, which enables the addition of peripheral devices on the trailer. An exemplary device on the CAN bus is the rear obstacle detector and an exemplary device attached to the USB port is a reversing camera. USB is preferable in this case as the camera would generate large amounts of data compared to the remaining data on the CAN bus.

The trailer access point can be mounted in a housing similar to that used for a trailer information module but without a display being necessary. If a display is needed, it would be possible to use a bistable cholestatic display or zero power LCD display.

In use, when the trailer access point is powered, the provision of the access point enables the data from the sensors or devices to be read by another device with a client browser. The trailer access point takes the data from the devices and creates dynamic content populated into typically an html format, which format can then be served to a third party device. Such third party devices could include a tractor navigation system or a smartphone. It would also be possible to use a laptop. The invention enables the data to be made available to the driver during normal operation as well as to a service technician for maintenance purposes at low cost using standard devices, in particular as the third party device does not need to process this data further to display the data for the user.

It would also be possible to provide control spaces on the third party devices which could then be served back to the microcontroller.

In a further embodiment of the invention, when the communication interface detects a wireless signal to which it has access, the trailer access point can report the operational data onto the network. The information can then be transmitted to the operator's base or technicians. It is known to currently use GSM for this but it is not popular with operators due to the relatively high ongoing costs. In this case the trailer access point is a client rather than a server.

Although the trailer access point has been specifically described as a microcontroller, it would be possible to incorporate the functionality as an auxiliary function in the trailer electronic brake control unit. The trailer electronic brake control unit receives the operational data from the sensor outputs but would need to have an additional communication interface to be able to provide the interface to the standards compliant browser or client.

## Claims

1. A trailer electronic braking system comprising a braking device (18-21) capable of generating a braking force on a wheel (1-4) on the trailer, a brake force into the brake cylinders being controllable by a braking ECU (13), which braking ECU (13) is connected to a standards compliant communication bus (24) on said trailer and is adapted to receive data inputs from sensors (5-8) on the trailer, wherein the system further comprises means to interface to trailer electronics and a communications interface, **characterised in that** the said means is adapted to receive inputs from further sensors on the trailer and/or to read the inputs from sensors received by the braking ECU such that data received from the sensors can be rendered in standards compliant manner and wirelessly transmitted to a further device remote or distinct from the trailer, which further device is adapted to display information so received using a standards compliant client.

2. A trailer electronic braking system according to Claim 1, wherein the inputs from the sensors are rendered into an html format to thereby create dynamic content.

3. A trailer electronic braking system according to Claim 1 or Claim 2, wherein the means is a microcontroller.

4. A trailer electronic braking system according to Claim 1 or Claim 2, wherein the means is incorporated into the trailer electronic brake control unit (13) as an auxiliary function.

5. A trailer electronic braking system according to any one of Claims 1 to 4, wherein the interface to the trailer electronic systems provides an interface to the trailer electronic brake control unit (13).

6. A trailer electronic braking system according to any one of Claims 1 to 5, when installed on a refrigerated trailer, the interface is adapted to communicate with the refrigerator controls.

7. A trailer electronic braking system according to any one of Claims 1 to 6, wherein the data is rendered in a format compatible with W3C standards.

8. A trailer electronic braking system according to any one of Claims 1 to 7, wherein the communications interface is adapted to detect the presence of an available and authorised wireless data network and to transmit a data report via the said data network to a remote operator.

## Patentansprüche

1. Elektronische Anhängerbremsanlage, umfassend eine Bremsvorrichtung (18-21), die eine Bremskraft an einem Rad (1-4) des Anhängers generieren kann, wobei eine in die Bremszylinder eingeleitete Bremskraft von einem elektronischen Bremssteuergerät (13) geregelt werden kann, das mit einem normgerechten Kommunikationsbus (24) am besagten Anhänger verbunden ist und zum Empfang von Dateneingängen von Sensoren (5-8) am Anhänger ausgelegt ist, wobei die Anlage weiter ein Mittel zum Bildung einer Schnittstelle zur Anhängerelektronik sowie eine Kommunikationsschnittstelle umfasst, **dadurch gekennzeichnet, dass** das besagten Mittel zum Empfang von Eingängen von weiteren Sensoren am Anhänger und/oder zum Lesen der vom elektronischen Bremssteuergerät empfangenen Eingänge von Sensoren ausgelegt ist, so dass von den Sensoren empfangene Daten auf eine normgerechte Art und Weise erbracht und drahtlos zu einer weiteren vom Anhänger entfernten oder separaten Vorrichtung übertragen werden können, wobei die weitere Vorrichtung zur Anzeige der auf diese Weise empfangenen Imformation unter Anwendung eines normgerechten Clients ausgelegt ist.

2. Elektronische Anhängerbremsanlage nach Anspruch 1, wobei die Eingänge von den Sensoren zur Schaffung eines dynamischen Inhalts in einem html-Format erbracht werden.

3. Elektronische Anhängerbremsanlage nach Anspruch 1 oder Anspruch 2, wobei das Mittel ein ein Mikrokontroller ist.

4. Elektronische Anhängerbremsanlage nach Anspruch 1 oder Anspruch 2, wobei das Mittel als Zusatzfunktion in das elektronische Bremssteuergerät (13) integriert ist.

5. Elektronische Anhängerbremsanlage nach Anspruch 1 oder Anspruch 2, wobei die Schnittstelle zur Anhängerelektronik eine Schnittstelle zum elektronischen Bremssteuergerät (13) bereitstellt.

6. Elektronische Anhängerbremsanlage nach einem der Ansprüche 1 bis 5, wobei die Schnittstelle bei Einbau in einen Kühlanhänger zur Kommunikation mit den Bedienungselementen der Kühlanlage ausgelegt ist.

7. Elektronische Anhängerbremsanlage nach einem der Ansprüche 1 bis 6, wobei die Daten in einem mit W3C-Normen kompatiblen Format erbracht werden.

8. Elektronische Anhängerbremsanlage nach einem der Ansprüche 1 bis 7, wobei die Kommunikationsschnittstelle zur Erkennung der Anwesenheit eines verfügbaren und zugelassenen drahtlosen Datennetzes und zur Übertragung eines Datenberichts über das besagte Netz an einen Femoperator ausgelegt ist.

## Revendications

1. Système électronique de freinage d'une remorque, comprenant un dispositif (18 à 21) de freinage apte à produire une force de freinage sur une roue (1 à 4) de la remorque, une force de frein dans le cylindre de frein pouvant être commandée par une ECU (13) de freinage, laquelle ECU (13) de freinage est connectée à un bus (24) de communication, s'accommodant de normes, de la remorque et étant conçu pour recevoir des entrées de données de capteurs (5 à 8) sur la remorque, le système comprenant en outre des moyens pour faire l'interface à de l'électronique de la remorque et une interface de communication, **caractérisé en ce que** les moyens sont conçus pour recevoir des entrées d'autres capteurs sur la remorque et/ou pour lire les entrées de capteurs reçus par l'ECU de freinage, de manière à ce que des données reçues des capteurs puissent être transformées d'une manière s'accommodant de normes et transmises sans fil à un autre dispositif éloigné ou distinct de la remorque, lequel autre dispositif est conçu pour afficher de l'information ainsi reçue en utilisant un client s'accommodant de norme.

2. Système électronique de freinage de remorque suivant la revendication 1, dans lequel les entrées de capteur sont mis dans un format html pour créer ainsi un contenu dynamique.

3. Système électronique de freinage de remorque suivant la revendication 1 ou revendication 2, dans lequel les moyens sont un micro-unité de commande.

4. Système électronique de freinage de remorque suivant la revendication 1 ou revendication 2, dans lequel les moyens sont incorporés dans l'unité (13) électronique de commande de frein de remorque sous la forme d'une fonction auxiliaire.

5. Système électronique de freinage de remorque suivant l'une quelconque des revendications 1 à 4, dans lequel l'interface au système électronique de remorque procure une interface à l'unité (13) électronique de commande de frein de remorque.

6. Système électronique de freinage de remorque suivant l'une quelconque des revendications 1 à 5, lorsque installée sur une remorque réfrigérée, l'interface est conçue pour communiquer avec les commandes du réfrigérateur.

7. Système électronique de freinage de remorque suivant l'une quelconque des revendications 1 à 6, dans lequel les données sont mises dans un format compatible avec des normes W3C.

8. Système électronique de freinage de remorque suivant l'une quelconque des revendications 1 à 7, dans lequel l'interface de communication est conçue pour détecter la présence d'un réseau de données sans fil disponible et autorisé et pour transmettre un rapport de données par l'intermédiaire du réseau de données à un opérateur à distance.
